# EUROPEAN PATENT SPECIFICATION

(11) **EP 0 910 961 B1**
(45) Date of publication and mention of the grant of the patent: **20.09.2006**
(21) Application number: 98308645.5
(22) Date of filing: 22.10.1998
(51) Int. Cl.: A23P 1/08, A23J 3/30, B65D 65/46

(54) **Extrusion of hydrolysed proteins**
Extrusion von Proteinhydrolysaten
Extrusion d'hydrolysats de protéines

(30) Priority: 25.10.1997 GB 9722519
(43) Date of publication of application: 28.04.1999
(73) Proprietor: CERESTAR HOLDING BV, 4551 LA Sas Van Gent (NL)
(72) Inventor: De Meuter, Pascale Adolphine Emilienne, 1801 Vilvoorde, Peutie (BE); De Sadeleer, Jos Willy Ghislain Corneel, 3220 Holsbeek (BE); Roeper, Harald Wilhelm Walter, 1180 Bruxelles (BE)
(74) Representative: Knowles, James Atherton

(56) References cited:
- EP-A- 0 328 317
- EP-A- 0 593 123
- WO-A-96/34538
- GB-A- 1 320 953
- GB-A- 2 203 928

## Description

### Field of the invention

The present invention relates to protein based films, coatings or foils. The present invention also relates to a process for the formation of protein based films, coatings or foils. The films are usable as packaging material in general, particular applications relate to the packaging of food or feed.

### Background of the invention

There is a growing interest in producing packaging material in the form of films, coatings or foils which are at the same time biodegradable and edible. Coatings, foils and films, hereinafter collectively indicated as films, made from proteins or fractions of proteins isolated from naturally occurring mixtures, have been extensively described in the literature. Such products are generally prepared starting from a suspension. After the evaporation of the solvents, a film is obtained. One method used to make gluten containing films, is based on suspending the protein in a mixture of an organic solvent, such as ethanol and water, at an acid or an alkaline pH. The suspension is poured onto a support; the solvents are then evaporated to obtain a film. These so-called casted films have desirable properties and can be used as packaging material. The same technique is also applied for other proteins and hydrolysed proteins.

This film-forming technique is for example illustrated in US patent 3,653,925 wherein dried wheat gluten are dispersed in an alkaline medium consisting of alcohol and water. The dispersion is then applied to solid substrates, including food and then dried to form an edible coating.

However, casting film-forming solutions is not an easy and economically feasible technique on industrial scale. The use of large amounts of organic solvents makes this procedure expensive. These solvents also damage the environment and the health of people, furthermore organic solvents also entail safety risks.

In order to circumvent the problem of the use of organic solvents it is suggested in European patent application EP 0 593 123 to prepare foils or coatings on the basis of water-insoluble proteins. Evaporation of water then immediately results in film formation and organic solvents are not used in this case.

From the literature it is also known that mixtures comprising proteins or certain isolated fractions of proteins, in the presence of plasticizers, can be extruded. The presence of water and/or another plasticizer, reduces the glass transition temperature of gluten, so that the product can be extruded at a temperature below the breakdown temperature. The main advantage of this procedure, in contrast to casting, is that it overcomes the risks of working with large amounts of organic solvents, such as ethanol. Furthermore extrusion is also a continuous process that can be automated. Another advantage is that the same techniques as used for synthetic polymers can be applied to extrude and afterwards injection mould the proteins. No additional investment is needed for the plastics industry to produce biodegradable films consisting mainly of proteins.

The application of extrusion on proteins is described for example in UK patent 1,320,953. This patent relates to a process for preparing a granular seasoning which comprises a hydrolyzate or extract of plant or animal protein. US patent 3,682,661 discloses the extrusion of a dispersion of an undenatured film-forming vegetable protein through an annular die into a suitable coagulating bath and treating the resultant tube with a suitable tanning agent. The patent specifically describes the use of this process for preparing a sausage casing. The extrusion treatment is performed under mild conditions so as to avoid denaturation of the protein.
UK patent 2,203,928 discloses a method for producing an edible material wherein a solution of cellulose having a crystal form of cellulose II and a polypeptide or polysaccharide are mixed in an extruder and pressed into an coagulating bath, neutralised, washed an dried. Casting was used to obtain throughout the examples.

Although it is suggested in the literature that casting can be replaced by extrusion no successful attempts to make protein-based films have been disclosed.

In fact, when attempting to do so, the present inventors have found that the thermo-formation of proteinaceous material during the process or afterwards gives problems, due to shrinkage of the product. It is this problem which is solved by the present invention.

### Summary of the Invention

The present invention discloses a protein-based film, coating or foil wherein the film, coating or foil is prepared by physical-mechanical treatment of a composition comprising hydrolysed gluten and glycerol. Preferably, the physical-mechanical treatment is extrusion. The hydrolysed protein may be prepared before extrusion or extrusion is performed under such conditions that the protein is simultaneously hydrolysed.

The present invention further discloses a method for producing a protein-based film, coating or foil, said method comprising the following steps:
a) preparing hydrolysed gluten,
b) subjecting the hydrolysed gluten to a physical-mechanical treatment in the presence of glycerol and optionally in the presence of an emulsifier, and/or acid,
c) forming the treated product into a film.

The physical-mechanical treatment is preferably extrusion. Preferably, the process of the present invention is performed on a protein or protein mixture which due to hydrolyses or to the addition of an emulsifier or plasticizer has a glass transition temperature (Tg) of 50°C or lower.

### Detailed description of the invention

The present inventors have unexpectedly found that films with excellent properties can be produced by physical-mechanical treatment of hydrolysed proteins. Preferably, the physical-mechanical treatment is extrusion. It is however understood that, since extrusion involves mechanical energy input and this is combined with heating, other processes, wherein the same amount of energy is conveyed to the material, can equally well be used.

The present inventors have found that whereas extrusion of non-hydrolysed proteins results in irregularly shaped films, the thermo-formation of hydrolysed proteins into films results in films with beneficial properties.
The properties of these extruded films are comparable with films obtained by casting. Until now hydrolysed proteins have only been extruded for other applications such as the production of granular seasoning.

The present invention relates to a new and useful process for preparing films comprising hydrolysed proteins. Preferably, the protein is chosen from the group consisting of hydrolysed vegetable proteins from cereals such as for instance wheat, in particular wheat gluten, maize, barley, rye, millet, hydrolysed proteins from tuberous plants such as for instance potatoes, hydrolysed proteins from pulse such as soya, peas, beans or hydrolysates of animal proteins such as collagen, gelatin, lactoproteins, egg proteins, blood proteins, and combinations thereof. Another group of materials which are successfully used in the present invention are modified proteins.

It may be advantageous to add an additive, which is chosen from the group comprising emulsifiers and/or plasticizers and/or acids, as extrusion aid.

The inventors have discovered that hydrolysed protein films may be prepared by an extrusion process. This is a commercially practicable method. The films formed by this process are found to have desirable characteristics which makes them useful for various applications. The films of the present invention are usable in the confectionery, fruits and vegetables, meat, and pharmaceutical industries. They are for instance suitable as edible protection against loss or migration of one of the ingredients in foodstuff. The films are biodegradable. This aspect is of great importance for the packaging industry, which is very interested in this type of material, since it could solve part of the environmental problems we are struggling with today.

The present invention provides a new method of manufacturing a foil, coating or film based on hydrolysed proteins comprising the steps of:
a) physical-mechanical treatment of a composition containing a hydrolysed protein at suitable conditions of temperature, pressure and plasticiser / emulsifier amount,
b) followed by a thermo-forming step such as injection moulding or compression. Preferably, the physical-mechanical treatment is extrusion. However, other methods such a mechanical kneading are also usable.
The extruder can also be equipped with a die so that the extruded product is immediately formed into a film. This process is the so-called extrusion moulding. Although it is herein described that the process of the present invention starts from hydrolysed proteins it is evident that with a suitable choice of the reaction conditions it becomes possible to start with undenatured proteins which will hydrolyse upon extrusion.

The hydrolysed proteins used can be both of vegetable or of animal origin or combinations thereof, also modified proteins are used.

The extrusion process can be improved by adding additives such as emulsifiers, plasticisers, acids or combinations thereof. These products can be mixed with the hydrolysed protein before the extrusion or they can be dosed separately during the extrusion. The combination of (un) hydrolysed and/or modified proteins together with the added emulsifier(s), and/or plasticizer(s) and/or acids preferably results in a composition having a glass transition temperature which is below 50°C.

The properties of the obtained coating, foils or films, such as mechanical properties (stress, elongation and strain), colour, organoleptic qualities and permeability to gas, water, aroma, preservative or /and fat can be controlled by adding the correct additives such as plasticisers, hydrophobic substances, aromatic substances, colorants and flavourings.

Plasticisers are used to make the material more flexible. The plasticisers can be chosen for instance in the group consisting of fatty acids (derivatives), phtalates, sebacates, citrates, water, high molecular alcohols, triethanolamine, lactamides, phospholipids, mono-,di-, and oligosaccharides, acids, polyoles or derivatives like polyethylene glycol and glycerol or combinations thereof. The plasticiser is the food-compatible and/or degradable substance glycerol. The plasticiser is preferably added in a concentration of between 0.5% and 45%, more preferably in a concentration between 5% and 30%. A glass transition temperature below or near room temperature gives flexible films. If the amount of plasticiser is low only materials with a glass transition temperature above room temperature are produced, as a consequence they are brittle. During the extrusion, part of the water can be removed by applying vacuum.

Hydrophobic substances are added to reduce the moisture permeability of the material. They are chosen from the group of for instance oils, fats, waxes, emulsifiers or/and combinations thereof. Hydrophobicity is also influenced by the choice of the protein which may moreover be modified if necessary.

With a view to improve the strength of the films cellulosic or synthetic fibers are added to the composition before extrusion. The type of fiber plays an important role as well as the amount added. The length of the fibers can be reduced during the extrusion process, depending on the extrusion parameters. The compatibility between the hydrolysed proteins and the fibers has to be good to have an impact on the mechanical properties of the films. Addition of fibers also decreases the strain of the samples. Tailor made materials can be produced by changing the amount and the type of fibers.

In addition to the method, the invention further provides films, foils and coatings whereof the properties can be adapted to the desired application by a suitable choice of the additives.

The extrusion conditions have an influence on the properties of the material. The extrusion temperature is between 70°C and 160°C, more preferably between 100°C and 130°C. The extrusion can be done in both a single or a twin screw extruder. The shape of the die at the outlet of the extruder can be changed to obtain films of different sizes. Films are also formed by using other types of equipment and can for example be obtained by spinning or by calendering.

The hydrolysis of the proteins is achieved by standard methods i.e. enzymatic or acid hydrolysis. It is shown that depending on whether hydrolysis is partial or complete the amount of plasticiser needed varies, more plasticiser being needed when the hydrolysis is less complete.

It was observed that the films obtained from hydrolysed proteins notably gluten do not shrink and are therefore much more regular in form. The films prepared from hydrolysed gluten have a much better transparency and are also stronger.
Finally, it is also possible to use a mixture of hydrolysed and non-hydrolysed protein it was observed that up to 75 % of non-hydrolysed protein can be used, preferably the amount of non-hydrolysed protein was about 50 %. In such a case the favourable film characteristics of the present invention could still be found.

Compared with the known casting process the physical-mechanical process (such as the extrusion process) has many advantages. The extrusion process does not use organic solvents which are dangerous and environmentally unfriendly. The extrusion process is also much easier to be automated.

When the characteristics of the films of the examples of the present description and which are prepared from hydrolysed wheat gluten are compared with films made from unhydrolysed (vital) gluten it is observed that the extrusion product obtained from hydrolysed gluten does hardly shrink after preparation and has a much regular surface. The product made from the hydrolysed gluten is much more regular and more transparent this product stays more flexible upon storage. The product also has a higher tearing strength and is less brittle.

This opens up a whole new range of applications. Apart from packaging for (individual) protection of fruit, vegetables, meat and confectionery products the material can also be used to separate components or layers in food products and thereby to control internal moisture transfer. This is possible because the hydrolysed protein based films are edible. Examples are in deep freeze pizza's (dough separated from tomato sauce), pies and confectionery products (ice separated from baked product).

The present invention will be further illustrated on the basis of a number of examples. By the word "film" used in the examples is meant a coating as well as a foil. The examples focus on the use of hydrolysed wheat gluten but are performed in a similar manner when starting from other types of protein hydrolysates.

### Example 1

### Extrusion of hydrolysed gluten and film forming capabilities

The extrusion of 96g/min hydrolysed gluten and 53g/min glycerol was performed with a Werner & Phleiderer extruder, type ZSK25. The L/D ratio was set to 42. The number of barrel sections can be selected and thereby the total processing length can be varied. In the present case the barrel had five temperature sections, which were controlled separately. The first 4 barrels were of equal length, the fifth one was only half the length of the previous ones. The barrels were heated electrically and water was used for cooling. The temperature profile used was 40°C/120°C/135°C/90°C/40°C. The screw speed was adjusted to 200 rpm. The vent port at the fourth section was closed.

At the outlet the material was collected between two Teflon films, equipped with four spacers to adjust the thickness of the film. Twenty grams of the material was pressed to a film at 350 bar and 55°C.

The quality of the film was determined by comparing the degree of deformation after compression.

**Table 1. Influence of the type of gluten or protein on film quality**

| Type of gluten | dosage(g/min): gluten | Dosage(g/min): Glycerol | quality of the film |
|---|---|---|---|
| hydrolysed gluten (strong, DH* = 9%) | 87 | 46 | very good |
| hydrolysed gluten (weak, DH = 5%) | 87 | 46 | very good |
| vital gluten | 62 | 40 | strong deformation when pressure is released |
| gliadins | 49 | 33 | |
| glutenins | 40 | 46 | |
| deamidated gluten | 87 | 46 | |

| | | | |
|---|---|---|---|
| * DH is the degree of hydrolysis of the proteinaceous material as determined by the so-called OPA-method. This method is based on the absorption at 340 nm of the alkylisoindole formed between primary NH2 -groups and orthophtaldialdehyde (OPA) in the presence of N,N-dimethyl-2-mercaptoethyl-ammoniumchloride (DMA). (see for example Schmidt D.G. and A.J.P.M.Robben, VMT(1993),19: 13-15) | | | |

Due to strong S-S bridges in most of the gluten, the form stability was very weak, giving problems in the thermo-formation of these materials.

Plasticizer is added to decrease the glass transition temperature. Note that since the molecular weight of hydrolysed gluten is lower than for the other samples, less plasticizer is needed to reduce the glass transition temperature. As is apparent from Table 1 the hydrolysed gluten both when strongly or weakly hydrolysed result in films having a good quality.

### Example 2

### Extrusion of hydrolysed gluten influence of plasticizer

Extrusion as described in Example 1 was repeated using different amounts and types of plasticizer.

**Table 2. Influence of the plasticizer content on film quality**

| Type of gluten | dosage(g/min): gluten | Dosage(g/min): | quality of the film |
|---|---|---|---|
| hydrolysed gluten (strong, DH = 9%) | 146 | Glycerol/water | too low viscosity |
| | 146 | 0/65 | good but becomes brittle |
| | 146 | 0/22 | good |
| | 146 | 32/22 | too low viscosity |
| | 87 | 15/43 | good |
| | | 46/0 | |
| hydrolysed gluten (weak, DH = 5%) | 123 | | good |
| | 143 | 32/22 | good |
| | 143 | 15/43 | good but becomes brittle |
| | 130 | 0/65 | good but becomes brittle |
| | 130 | 0/43 | bad |
| | 87 | 0/22 | good |
| | | 46/0 | |

The glass transition temperature of strong hydrolysed gluten is lower then of weak hydrolysed gluten. The consequence is that less plasticizer is needed for strong hydrolysed gluten.
Products where water is added as plasticizer, become brittle during storage. This problem does not occur if glycerol is used.

### Example 3

### Extrusion of vital gluten influence of adding hydrolysed protein

Extrusion as described in Example 1 was repeated using vital gluten, vital gluten mixed with starch and vital gluten mixed with hydrolysed gluten.

**Table 3. Influence of mixing**

| Type of gluten | dosage(g/min): gluten | Dosage(g/min) :glycerol | quality of the film |
|---|---|---|---|
| vital gluten | 64 | 40 | large deformation after release of the |
| vital gluten + waxy corn starch (1:1) | 40 | 46 | pressure |
| vital gluten + hydrolysed gluten (1:1) | 64 | 30 | almost no deformation |

Addition of hydrolysed gluten to vital gluten results in a product with almost no deformation.

### Example 4

### Extrusion of hydrolysed gluten influence of fibers

Extrusion was performed as described in Example 1 using different types of fibers.

**Table 4. Influence of type of fiber on film properties**

| Dosage(g/min): hydrolysed gluten | dosage(g/min): glycerol | dosage(% on dry base): fibers | quality of the film |
|---|---|---|---|
| 64 | 34 | 0 | good quality |
| 64 | 34 | 3% cellulose | good quality |
| 64 | 34 | 5% flax | increased stress decreased strain |

No difference was noticed by adding 3% cellulose to the film. The addition of long flax fibers on the other hand had an influence on the mechanical properties of the hydrolysed gluten films.

## Claims

1. A protein-based film, coating or foil wherein the film, coating or foil is prepared by physical-mechanical treatment of a composition comprising hydrolysed gluten and glycerol.

2. A protein-based film coating or foil according to claim 1, wherein the composition further contains an emulsifier.

3. A protein-based film, coating or foil according to either claim 1 or claim 2, wherein the composition further comprises an acid.

4. A protein-based film, coating or foil according to any one of claims 1 to 3, wherein the combination of hydrolysed gluten and glycerol and/or the emulsifier and/or acid is chosen in such a way that the glass transition temperature is below 50°C.

5. A protein-based film, coating or foil according to any one of the preceding claims, wherein the composition comprises glycerol in a concentration of between 0.5% and 45%.

6. A protein-based film, coating or foil as claimed in claim 5, wherein the composition comprises glycerol in a concentration of between 5% and 30%.

7. A method for producing a protein-based film, coating or foil, said method comprising the following steps:
a) preparing hydrolysed gluten,
b) subjecting the hydrolysed gluten to a physical-mechanical treatment in the presence of glycerol and optionally in the presence of an emulsifier, and/or acid,
c) forming the treated product into a film.

8. A method according to claim 7, wherein the physical-mechanical treatment is extrusion.

9. A method according to claim 8, wherein the extrusion is performed using an extruder which comprises a film forming die and the extrusion is performed at a temperature of between 70 and 160°C.

10. A method according to any one of claims 7 to 9, wherein the protein-based film, coating or foil is suitable for use as packaging material.

## Patentansprüche

1. Film, Beschichtung oder Folie auf Proteinbasis, wobei der Film, die Beschichtung oder die Folie durch physikalisch-mechanische Behandlung einer Zusammensetzung, die hydrolysiertes Gluten und Glycerol umfaßt, hergestellt wird.

2. Film, Beschichtung oder Folie auf Proteinbasis nach Anspruch 1, wobei die Zusammensetzung außerdem einen Emulgator enthält.

3. Film, Beschichtung oder Folie auf Proteinbasis nach entweder Anspruch 1 oder Anspruch 2, wobei die Zusammensetzung außerdem eine Säure umfaßt.

4. Film, Beschichtung oder Folie auf Proteinbasis nach einem der Ansprüche 1 bis 3, wobei die Kombination aus hydrolysiertem Gluten und Glycerol und/oder dem Emulgator und/oder der Säure in einer solchen Weise ausgewählt ist, daß die Glastübergangstemperatur unter 50 °C liegt.

5. Film, Beschichtung oder Folie auf Proteinbasis nach einem der vorhergehenden Ansprüche, wobei die Zusammensetzung Glycerol in einer Konzentration zwischen 0,5 und 45 % umfaßt.

6. Film, Beschichtung oder Folie auf Proteinbasis nach Anspruch 5, wobei die Zusammensetzung Glycerol in einer Konzentration zwischen 5 und 30 % umfaßt.

7. Verfahren zur Herstellung eines Films, einer Beschichtung oder Folie auf Proteinbasis, wobei das Verfahren folgende Schritte umfaßt:
a) Herstellen von hydrolysiertem Gluten,
b) Unterziehen des hydyrolysierten Glutens einer physikalisch-mechanischen Behandlung in Gegenwart von Glycerol und gegebenenfalls in Gegenwart eines Emulgators und/oder einer Säure,
c) Formen des behandelten Produktes zu einem Film.

8. Verfahren nach Anspruch 7, wobei die physikalisch-mechanische Behandlung Extrusion ist.

9. Verfahren nach Anspruch 8, wobei die Extrusion unter Verwendung eines Extruders durchgeführt wird, der eine Filmbildungsdüse umfaßt, und die Extrusion bei einer Temperatur zwischen 70 und 160 °C durchgeführt wird.

10. Verfahren nach einem der Ansprüche 7 bis 9, wobei der Film, die Beschichtung oder die Folie auf Proteinbasis zur Verwendung als Verpackungsmaterial geeignet ist.

## Revendications

1. Film, revêtement ou feuille à base de protéines, dans lesquels le film, le revêtement ou la feuille sont préparés par le traitement mécano-physique d'une composition comprenant du gluten hydrolysé et du glycérol.

2. Film, revêtement ou feuille à base de protéines selon la revendication 1, dans lesquels la composition contient en outre un émulsifiant.

3. Film, revêtement ou feuille à base de protéines selon la revendication 1 ou la revendication 2, dans lesquels la composition comprend en outre un acide.

4. Film, revêtement ou feuille à base de protéines selon l'une quelconque des revendications 1 à 3, dans lesquels la combinaison de gluten hydrolysé et de glycérol et/ou de l'émulsifiant et/ou de l'acide est choisie de manière à ce que la température de transition vitreuse soit inférieure à 50°C.

5. Film, revêtement ou feuille à base de protéines selon l'une quelconque des revendications précédentes, dans lesquels la composition comprend du glycérol dont la concentration se situe entre 0,5 % et 45 %.

6. Film, revêtement ou feuille à base de protéines selon la revendication 5, dans lesquels la composition comprend du glycérol dont la concentration se situe entre 5 % et 30 %.

7. Procédé de production d'un film, d'un revêtement ou d'une feuille à base de protéines, ledit procédé comprenant les étapes suivantes consistant à :
a) préparer du gluten hydrolysé,
b) soumettre le gluten hydrolysé à un traitement mécano-physique en présence de glycérol et facultativement en présence d'un émulsifiant et/ou d'un acide,
c) former le produit traité en un film.

8. Procédé selon la revendication 7, dans lequel le traitement mécano-physique est une extrusion.

9. Procédé selon la revendication 8, dans lequel l'extrusion est réalisée en utilisant une machine d'extrusion qui comprend une filière formant un film et l'extrusion est réalisée à une température située entre 70 et 160°C.

10. Procédé selon l'une quelconque des revendications 7 à 9, dans lequel le film, le revêtement ou la feuille à base de protéines sont appropriés pour un usage en tant que matériau d'emballage.
